(19) Europäisches Patentamt
European Patent Office
Office européen des brevets

(11) **EP 2 405 399 B1**

(12) **FASCICULE DE BREVET EUROPEEN**

(45) Date de publication et mention
de la délivrance du brevet:
**06.06.2018 Bulletin 2018/23**

(51) Int Cl.:
***G06T 7/80*** *(2017.01)*

(21) Numéro de dépôt: **11172870.5**

(22) Date de dépôt: **06.07.2011**

(54) **Méthode de calibration de l'orientation d'une caméra vidéo embarquée**

Eichungsverfahren zur Ausrichtung einer Onboard-Videokamera

Method for calibrating the orientation of an on-board video camera

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.07.2010 FR 1055488**

(43) Date de publication de la demande:
**11.01.2012 Bulletin 2012/02**

(73) Titulaire: **Imajing
31520 Ramonville Saint Agne (FR)**

(72) Inventeurs:
• **Moisy-Mabille, Yvonnic
31400 TOULOUSE (FR)**
• **Spangenberg, Mariana
31400 TOULOUSE (FR)**
• **Lamort de Gail, Etienne
31400 TOULOUSE (FR)**

(74) Mandataire: **Augarde, Eric et al
Brevalex
56 Boulevard de l'Embouchure,
Bât. B
B.P. 27519
31075 Toulouse Cedex 2 (FR)**

(56) Documents cités:
**US-A1- 2009 290 032**

• **YU-ZHONG CHEN ET AL: "Amobile System
Combining Laser Scanners and Cameras for
Urban Spatial Objects Extraction", MACHINE
LEARNING AND CYBERNETICS, 2007
INTERNATIONAL CONFERENCE ON, IEEE, PI, 1
août 2007 (2007-08-01), pages 1729-1733,
XP031154094, ISBN: 978-1-4244-0972-3**
• **NAVEEN ONKARAPPA ET AL: "On-Board
Monocular Vision System Pose Estimation
through a Dense Optical Flow", 21 juin 2010
(2010-06-21), IMAGE ANALYSIS AND
RECOGNITION, SPRINGER BERLIN
HEIDELBERG, BERLIN, HEIDELBERG, PAGE(S)
230 - 239, XP019144832, ISBN: 978-3-642-13771-6
* abrégé * * page 232, ligne 5-10 * * partie "3.1
Model formulation" ***
• **Wikipedia: "Essential matrix",
https://en.wikipedia.org/wiki/Essential_ma trix**

## Description

### DOMAINE TECHNIQUE

La présente invention concerne de manière générale une méthode de calibration de l'orientation d'une caméra vidéo embarquée sur un véhicule, par exemple un véhicule aérien ou spatial. Elle trouve particulièrement à s'appliquer dans le domaine de la cartographie mobile (*Mobile Mapping*).

### ÉTAT DE LA TECHNIQUE ANTÉRIEURE

Les systèmes de cartographie mobiles permettent de faire un relevé d'une zone géographique d' intérêt à partir d'un véhicule en mouvement équipé d'au moins une caméra vidéo et d'un système de navigation GPS.

Un tel système nécessite de connaître avec précision l'orientation (ou l'attitude) de la caméra embarquée par rapport au véhicule.

Plusieurs méthodes de calibration de l'orientation d'une caméra embarquée ont été proposées dans l'état de la technique.

Tout d'abord, il est connu d'assembler avec précision la caméra sur un support solidaire du véhicule, le cas échéant à l'aide de repères angulaires, pour aligner l'axe optique de la caméra selon une orientation de consigne par rapport au véhicule. Cette opération d'étalonnage est toutefois délicate, et doit être en pratique répétée fréquemment car l'assemblage se dérègle inévitablement sous l'effet des vibrations du véhicule.

Dans certains cas, la caméra embarquée est montée sur une tourelle ou un cardan pour permettre de l'orienter plus facilement. Toutefois ces dispositifs mécaniques de grande précision sont coûteux et soumis aux mêmes problèmes de calibration et de réglage que les dispositifs fixes.

Il a été proposé dans la demande FR-A-2770317 d'utiliser une mire tridimensionnelle placée sur un bâtiment pour calibrer l'orientation d'une caméra embarquée. Toutefois, ce procédé de calibration est contraignant dans la mesure où il nécessite de passer régulièrement devant la mire et ne permet pas de corriger les dérives d'orientation de la caméra en cours de mission.

US 2009/0290032 A1 propose de trouver des paramètres extrinsèques d'une caméra embarquée sur un véhicule et requiert l'autocalibrage répété.

Yu-Zhong Chen et al., "Amobile System Combining Laser Scanners and Cameras for Urban Spatial Objects Extraction", 2007 International Conférence on Machine Learning and Cybernetics, IEEE, PI, 1 août 2007, pages 1729 - 1733, ISBN: 978-1-4244-0972-3 décrit la fusion des capteurs pour la cartographie et navigation en combinant un scanner laser calibré afin de réduire le coût de recherche.

Naveen Onkorappa et al., "On-Board Monocular Vision System Pose Estimation through a Dense Optical Flow", 21 juin 2010, Image Analysis and Récognition, Springer, Berlin, Heidelberg, pages 230 - 239, ISBN: 978-3-642-13771-6 présente l'estimation de pose pour une caméra embarquée sur un véhicule. La méthode est robuste en raison du flux optique dense et de RANSAC.

L'objet de la présente invention est par conséquent de proposer une méthode de calibration de l'orientation d'une caméra embarquée sur un véhicule en mouvement, qui soit simple et puisse être mise en oeuvre de manière dynamique.

### EXPOSÉ DE L'INVENTION

Selon un premier mode de réalisation, la présente invention est définie par une méthode de calibration de l'orientation d'une caméra vidéo embarquée sur un véhicule en mouvement selon la revendication 1. Avantageusement, l'angle est estimé pour une pluralité de couples d'images, que ces estimations sont moyennées et l'on retient comme estimation dudit angle la moyenne ainsi obtenue. La caméra est équipée de trois accéléromètres disposés selon trois axes orthogonaux, dont deux sont situés dans le plan image de la caméra. Lesdits accéléromètres sont fixés sur une carte de circuit imprimé montée dans le boîtier de la caméra.

L' angle de roulis et l'angle de tangage de la caméra sont alors mesurés au moyen desdits accéléromètres, et la projection sur le plan horizontal du vecteur donnant la direction de déplacement est calculée à partir des angles de roulis et de tangage ainsi mesurés.

L' angle de tangage et l'angle de roulis de la caméra peuvent alternativement être déterminés à partir de lignes desdites images, représentant des lignes horizontales et verticales de l'environnement.

On apparie avantageusement des points en recherchant des points singuliers dans les deux images, chaque point singulier étant associé à un vecteur de caractéristiques caractérisant son environnement local, et en déterminant pour chaque point singulier de la première image le point singulier de la seconde image ayant les caractéristiques les plus proches.

Le cap du véhicule peut être calculé à l'aide des coordonnées d'une pluralité de positions successives du véhicule, dans un référentiel terrestre, et que l'on en calibre le cap de la caméra comme somme du cap du véhicule et de l'angle ainsi estimé.

Les coordonnées du véhicule dans le référentiel terrestre peuvent être obtenues à l'aide d'un système de positionnement satellitaire et/ou terrestre.

Selon un second mode de réalisation, l'invention concerne également une caméra vidéo embarquée sur un véhicule en mouvement selon la revendication 6.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 représente schématiquement une caméra embarquée et son orientation par rapport à un référentiel terrestre local ;
La Fig. 2 représente schématiquement deux images prises par la caméra en deux instants successifs, dans le cadre d'un premier mode de réalisation de l'invention ;
La Fig. 3 représente schématiquement un ordinogramme de la méthode de calibration de l'orientation de la caméra, selon un premier mode de réalisation de l'invention ;
La Fig. 4 représente schématiquement deux images prises par la caméra en deux instants successifs, dans le cadre d'un second mode de réalisation de l'invention ;
La Fig. 5 représente schématiquement un ordinogramme de la méthode de calibration de l'orientation de la caméra, selon un second mode de réalisation de l'invention.

## EXPOSÉ DÉTAILLÉ DE MODES DE RÉALISATION PARTICULIERS

Nous considérerons à nouveau dans la suite une caméra vidéo embarquée à bord d'un véhicule en mouvement, par exemple un véhicule automobile ou un aéronef.

Nous supposerons que ce véhicule est équipé d'un système de navigation, par exemple un système de navigation satellitaire lui permettant de déterminer à tout instant sa position et, par conséquent, sa vitesse. Le cas échéant, le véhicule sera également équipé d'un odomètre et/ou d'un système de positionnement terrestre, utilisant par exemple les stations de base d'un système de télécommunication cellulaire. Dans ce cas, le véhicule pourra avantageusement obtenir sa position même si les signaux satellitaires de positionnement sont absents ou en nombre insuffisant. Le système de positionnement terrestre pourra ou non être hybridé avec le système de positionnement satellitaire. Un altimètre pourra être également prévu à titre complémentaire.

Le véhicule est équipé d'au moins une caméra vidéo, qui peut être fixe par rapport au véhicule ou bien orientable par rapport à ce dernier. Dans le premier cas, l'orientation de la caméra étant susceptible de dériver dans le temps, l'opération de calibration selon l'invention sera avantageusement répétée à intervalles réguliers. Dans le second cas, on pourra déterminer la position angulaire de la caméra par rapport à une position de référence, au moyen d' un capteur angulaire, de manière connue en soi. Toutefois, la position de référence de la caméra, dite zéro angulaire, pouvant dériver dans le temps, l'opération de calibration devra être répétée. En absence de capteur angulaire, l'opération de calibration sera effectuée à chaque fois qu'il sera nécessaire de faire une mise à jour de la position angulaire de la caméra.

La caméra vidéo embarquée est avantageusement pourvue de trois accéléromètres permettant de mesurer son orientation par rapport à la verticale. Ces trois accéléromètres sont placés selon trois axes orthogonaux et intégrés dans le boîtier de la caméra. Avantageusement, les accéléromètres seront de type MEMS (*Micro Electro Mechanical Systems*) voire NEMS (*Nano Electro Mechanical Systems*) et disposés sur le circuit imprimé (PCB) contenant l'électronique de contrôle de la caméra.

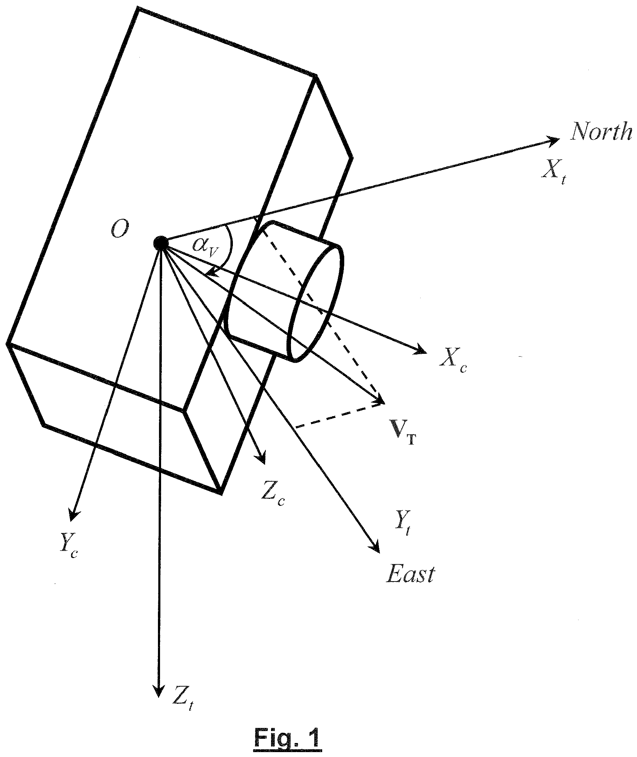

La Fig. 1 représente de manière schématique une caméra vidéo embarquée. On a représenté par $OX_c$ son axe optique, le plan image de la caméra étant défini par les axes $OY_c$ et $OZ_c$, de sorte que $OX_c$, $OY_c$, $OZ_c$ définissent un repère orthogonal direct.

On a également représenté sur la figure, un référentiel terrestre local ($OX_t$, $OY_t$, $OZ_t$), $OZ_t$ étant l'axe donnant la verticale du lieu, dirigé vers le bas, $OX_t$ étant par exemple orienté vers le Nord et $OY_t$ vers l'Est.

On comprendra que les trois accéléromètres montés sur la caméra permettent de mesurer les angles de roulis et de tangage de la caméra et par conséquent l'orientation de $OZ_c$ par rapport à $OZ_t$.

Alternativement, les angles de roulis et de tangage peuvent être obtenus à l'aide des images vidéo prises par la caméra en déterminant dans l'image les angles des lignes horizontales et verticales (arêtes de bâtiments ou ligne d'horizon par exemple). Il est également possible d'obtenir ces angles grâce à une combinaison du traitement d'images précité et des mesures accélérométriques.

Le vecteur vitesse instantanée du véhicule, **V,** a pour projection dans le plan horizontal $(OX_t, OY_t)$ un vecteur **$V_T$,** donnant sa direction de déplacement instantanée. On définit le cap du véhicule, $\alpha_V$, comme l'angle entre la direction du Nord, autrement dit l'axe $OX_t$, et le vecteur **$V_T$.**

De manière similaire on définit le cap de la caméra comme l'angle, $\alpha_c$, entre les axes $OX_t$ et $OX_{ct}$, où $OX_{ct}$ est la projection de l'axe $OX_c$ sur le plan horizontal $(OX_t, OY_t)$.

On désignera par la suite par repère de la caméra le repère orthogonal $(OX_{ct}, OY_{ct}, OZ_t)$ où $OY_{ct}$ est un axe du plan horizontal, tel que $(OX_{ct}, OY_{ct}, OZ_t)$ soit direct. Par souci de simplification, le repère $(OX_{ct}, OY_{ct})$ sera également dénommé repère de la caméra à chaque fois que l'on se placera dans le plan horizontal.

Dans un premier mode de réalisation on supposera que, pendant une fenêtre temporelle d'observation déterminée, le cap $\alpha_V$ du véhicule est sensiblement constant, autrement dit que le véhicule n'est pas en train de virer. En pratique, on pourra vérifier, à partir des coordonnées des positions successives du véhicule, que le mouvement du véhicule est bien rectiligne pendant la fenêtre d'observation et on en déduira la valeur $\alpha_V$. Par exemple, on calculera $\alpha_V$ pour les positions successives du véhicule dans la fenêtre d'observation et l'on considérera que le cap est constant si les variations de $\alpha_V$ dans cette fenêtre sont inférieures à une valeur de seuil prédéterminée.

Comme nous le verrons toutefois plus loin, cette condition sur la constance du cap n'est pas nécessaire et nous relaxerons cette contrainte dans un second mode de réalisation de l'invention.

Dans tous les cas, l'orientation de la caméra vidéo par rapport au véhicule est considérée comme constante pendant cette période d'observation. Cette hypothèse est vérifiée si la caméra est fixe par rapport au véhicule (absence de dérive pendant la fenêtre d'observation) ou bien, dans le cas où elle est orientable, si l'on maintient son orientation constante pendant cette période.

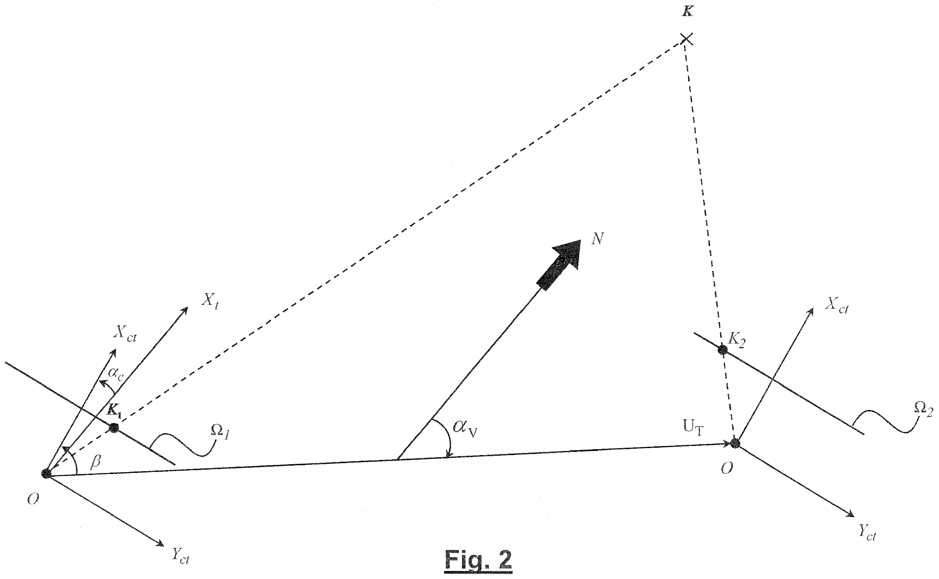

On a représenté en Fig. 2 deux images prises par la caméra vidéo, en deux instants successifs, $t_1$ et $t_2$, de la période d'observation.

Le plan de la figure est le plan horizontal du référentiel terrestre local. Les angles de tangage et de roulis de la caméra sont supposés ici nuls, le cas où ils ne sont pas nuls se ramenant au cas précédent moyennant une opération préalable de projection sur le plan horizontal comme précisé plus loin.

Pour des raisons de simplification, la caméra a été représentée ici comme un modèle sténopé. Il est toutefois clair qu'en pratique tout type de caméra peut être envisagé.

On a noté $K$ un point fixe, par rapport au référentiel terrestre local, situé dans l'environnement du véhicule. L'image de $K$ est représentée par le point $K_1$ au temps $t_1$ et par le point $K_2$ au temps $t_2$. Les points $K_1$ et $K_2$ sont alors dits « correspondants ». De manière générale, on appelle couple de points correspondants des points de deux images vidéo distinctes, $\Omega_1$ et $\Omega_2$, représentatifs d'un même point physique.

Comme nous le verrons plus loin, à partir d'une pluralité de couples de points correspondants, on peut déterminer la direction du déplacement de la caméra dans le plan horizontal, exprimée dans le repère de la caméra $(OX_{ct}, OY_{ct})$.

Le déplacement de la caméra est le même que celui du véhicule. Ce déplacement est représenté par un vecteur de translation, **U**, dont la projection dans le plan horizontal, n'est autre que le vecteur $U_T = V_T(t_2-t_1)$.

Si l'on connait la direction de déplacement dans le repère de la caméra $(OX_{ct}, OY_{ct})$, on peut en déduire l'écart angulaire (dans le plan horizontal), $\beta$, entre la direction du véhicule et l'axe optique de la caméra.

Le cap de la caméra, c'est-à-dire l'angle entre le Nord et la direction de l'axe optique, $\alpha_c$, s'obtient alors par la somme algébrique :

$$\alpha_c = \alpha_V + \beta \qquad\qquad (1)$$

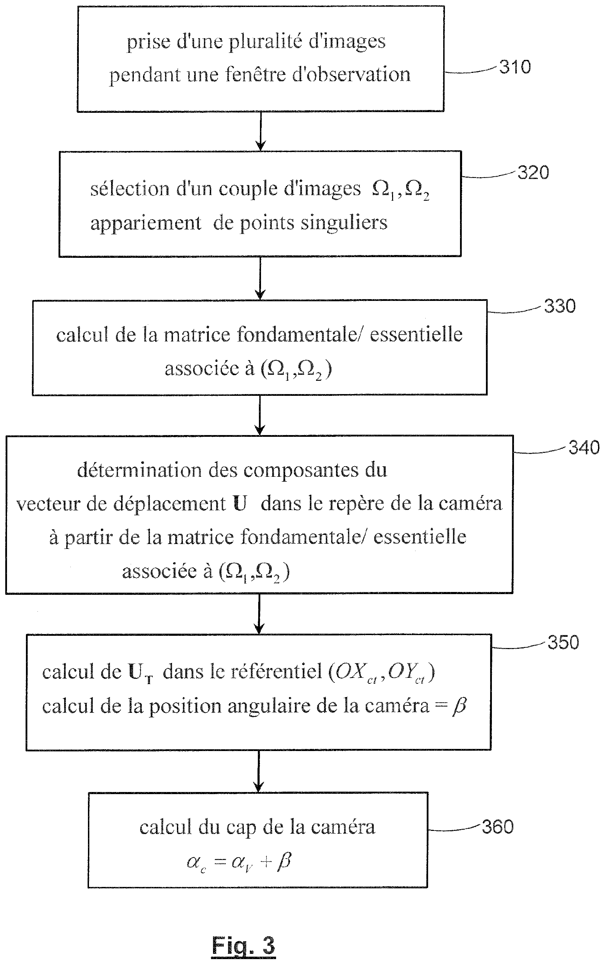

La Fig. 3 représente schématiquement la méthode de calibration de l'orientation d'une caméra embarquée selon un premier mode de réalisation de l'invention.

A l'étape 310, la caméra prend une série d'images successives de l'environnement du véhicule, pendant une fenêtre temporelle d'observation où le cap du véhicule est sensiblement constant. Pour ce faire, la fenêtre temporelle d'observation est choisie suffisamment courte pour que le cap du véhicule n'ait pas varié et suffisamment longue pour qu'au moins deux images aient pu être prises par la caméra pendant cette fenêtre.

A l'étape 320, on sélectionne au moins deux images successives de ladite série et l'on recherche dans ces deux images des couples de points correspondants.

Pour ce faire, on détecte tout d'abord des points singuliers dans les images $\Omega_1$ et $\Omega_2$. Par points singuliers, on entend des points dont l'environnement présente une configuration particulière. De manière générale, on associera à chaque point singulier un descripteur caractérisant l'environnement local de ce point. Ce descripteur se présentera de manière générale sous la forme d'un vecteur de caractéristiques (par exemple des gradients calculés selon différentes directions autour de ce point).

Les points singuliers pourront être fournis par une méthode de détection de coins (*corners*), de frontières (*edges*) ou d'extrema locaux (*blobs*). On trouvera notamment une méthode de détection combinée de coins et de frontières dans l'article de C. Harris et al. intitulé « A combined corner and edge detector » publiée dans Proc. Alvey Vision Conférence, pages 147-152, 1988.

Pour la recherche des points singuliers et l'obtention de leurs descripteurs associés, on pourra utiliser la méthode dite « SIFT » telle que décrite dans l'article de D.G. Lowe intitulé « Distinctive image features from scale-invariant keypoints » publié dans International Journal of Computer Vision, Vol. 60, N°2, 2004 pp. 91-110, ou la méthode dite « SURF » telle que décrite dans l'article de H. Bay et al., intitulé « Speeded-Up Robust Features » publié dans Computer Vision and Image Understanding, Vol. 110, N°3, pp.346-359, Juin 2008.

L' homme du métier comprendra que d'autres méthodes de détection de points singuliers pourront être utilisées sans pour autant sortir du cadre de la présente invention.

On cherche ensuite à apparier des points singuliers des deux images $\Omega_1$ et $\Omega_2$. Deux points singuliers seront appariés s'ils présentent des descripteurs identiques ou similaires, autrement dit si leurs vecteurs de caractéristiques sont égaux ou proches au sens d'une certaine métrique. Par exemple, pour un point donné de l'image $\Omega_1$ de vecteur de caractéristiques $\sigma_1$ on pourra rechercher le point dans l'image $\Omega_2$ dont le vecteur de caractéristique $\sigma_2$ est le plus proche. Un couple de points appariés est susceptible de représenter le même point physique de l'environnement, autrement dit d'être un couple de points correspondants au sens défini ci-dessus.

Si le couple d' images $\Omega_1$ et $\Omega_2$ présente un nombre de points appariés inférieur à un minimum prédéterminé, ce couple d'images est rejeté et un nouveau couple d'images est sélectionné parmi la pluralité d'images prises dans la fenêtre d'observation. Le minimum est choisi supérieur ou égal à 5 et de préférence supérieur ou égal à 8. Le processus de sélection de points singuliers et de recherche de couples de points appariés, tel que décrit précédemment, est répété jusqu'à ce que le nombre minimum de points appariés soit atteint.

A l'issue de cette étape, on dispose d' une pluralité de points appariés entre les deux images en question.

On détermine ensuite, à partir des couples de points appariés, obtenus à l'étape précédente, la direction de déplacement de la caméra entre les instants $t_1$ et $t_2$, dans un référentiel lié à celle-ci.

Si l'on connaît les paramètres intrinsèques de la caméra (entre autres sa distance focale), le vecteur de déplacement peut être déterminé à partir des coordonnées d'au moins 5 couples de points appariés. Si les paramètres intrinsèques de la caméra ne sont pas connus, ce vecteur peut être déterminé en général à partir des coordonnées d'au moins 8 couples de points appariés.

Le vecteur de déplacement peut être obtenu grâce au calcul d'une matrice, dite matrice essentielle, dans le premier cas (paramètres intrinsèques connus) et au calcul de la matrice, dite matrice fondamentale, dans le second cas (paramètres intrinsèques inconnus).

On rappelle qu'en géométrie épipolaire, la matrice essentielle associée à un couple d'images $\Omega_1$ et $\Omega_2$ est définie comme la matrice $\mathbf{E}$ de taille $3 \times 3$ telle que :

$$\mathbf{E} = \mathbf{U}_\times \mathbf{R} \qquad (2)$$

où $\mathbf{R}$ est la matrice de rotation entre les deux images, c'est-à-dire entre les orientations de la caméra au temps $t_1$ et au temps $t_2$ et $\mathbf{U}_\times$ est la matrice obtenue à partir des composantes du vecteur de translation $\mathbf{U} = (u_1\ u_2\ u_3)^T$, exprimé dans le référentiel de la caméra comme :

$$U_\times = \begin{pmatrix} 0 & -u_3 & u_2 \\ u_3 & 0 & -u_1 \\ -u_2 & u_1 & 0 \end{pmatrix} \qquad (3)$$

On rappelle que la matrice essentielle vérifie la relation :

$$\tilde{\mathbf{y}}_2^\mathrm{T} \mathbf{E} \tilde{\mathbf{y}}_1 = 0 \qquad (4)$$

où $\tilde{\mathbf{y}}_1$ et $\tilde{\mathbf{y}}_2$ sont des vecteurs représentant les coordonnées homogènes normalisées de deux points appariés quelconques respectivement dans $\Omega_1$ et $\Omega_2$ et $.^\mathrm{T}$ désigne l'opération de transposition. Dans la relation (4) on suppose que les paramètres intrinsèques de la caméra, nécessaires à la normalisation des coordonnées, sont connus.

Si les paramètres intrinsèques de la caméra ne sont pas connus, les coordonnées homogènes des points appariés vérifient encore :

$$\mathbf{y}_2^\mathrm{T} \mathbf{F} \mathbf{y}_1 = 0 \qquad (5)$$

où $\mathbf{y_1}$ et $\mathbf{y_2}$ sont les coordonnées homogènes respectives de deux points appariés et $\mathbf{F}$ est la matrice fondamentale associée au couple d'images $\Omega_1$ et $\Omega_2$.

On rappelle que la matrice fondamentale $\mathbf{F}$ est liée à la matrice essentielle $\mathbf{E}$ par la relation :

$$\mathbf{E} = \mathbf{K}_2^T \mathbf{F} \mathbf{K}_1 \tag{6}$$

où $\mathbf{K}_1$ et $\mathbf{K}_2$ sont les matrices de calibration intrinsèques de la caméra pour les images $\Omega_1$ et $\Omega_2$ On notera que dans le cas présent, les matrices $\mathbf{K}_1$ et $\mathbf{K}_2$ sont identiques puisque les deux images sont prises à l'aide de la même caméra.

La matrice essentielle ou la matrice fondamentale peut être obtenue à l'étape 330, par exemple à l'aide de l'algorithme dit des 8 points (appariés) dont on trouvera une description par exemple dans l'ouvrage de R. Harley et al. intitulé « Multiple view geometry in computer vision », Cambridge University Press, 2003.

Avantageusement, la matrice $\mathbf{E}$ ou $\mathbf{F}$ est calculée de manière itérative en sélectionnant aléatoirement des groupes de 5 ou 8 points appariés et en déterminant celle qui décrit le mieux (au sens du plus large consensus) l'opération linéaire transformant les points singuliers de $\Omega_1$ en leurs points associés respectifs dans $\Omega_2$.

On utilisera par exemple la méthode dite RANSAC (*RANdom SAmple Consensus*) comme méthode d'estimation itérative. On trouvera une description de cette méthode dans l'article de M.A. Fischler intitulé « Random Sample Consensus : a paradigm for model fitting with applications to image analysis and automated cartography », publié dans Communications of the ACM, Vol. 24, N°6, pages 381-395.

Cette méthode d'estimation itérative permet avantageusement d'éliminer les appariements aberrants, c'est-à-dire les points appariés qui ne sont manifestement pas des points correspondants.

En effet, une fois la matrice obtenue au terme du processus itératif, les points appariés qui ne respectent pas le consensus, c'est-à-dire dont les coordonnées homogènes ne respectent pas les conditions (4) ou (5), peuvent être éliminés comme points aberrants.

A l'étape 340, on calcule la matrice de rotation $\mathbf{R}$ et le vecteur de translation $\mathbf{U}$ en décomposant soit la matrice essentielle $\mathbf{E}$, soit la matrice fondamentale, $\mathbf{F}$ à partir des expressions (2) et (6), respectivement. On pourra utiliser pour ce faire une décomposition en valeurs singulières (SVD) de manière connue en soi. Par exemple, la matrice $\mathbf{E}$ peut être décomposée sous la forme :

$$\mathbf{E} = \mathbf{P}\Sigma\mathbf{Q}^T \tag{7}$$

où $\Sigma$ est une matrice diagonale dont les éléments sont les valeurs singulières de $\mathbf{E}$ et $\mathbf{P}$ et $\mathbf{Q}$ sont des matrices orthogonales. Les matrices $\mathbf{R}$ et $\mathbf{U}_\times$ peuvent alors être obtenues par :

$$\mathbf{R} = \mathbf{P}\mathbf{W}^T\mathbf{Q}^T \quad \text{et} \quad \mathbf{U}_x = \mathbf{P}\mathbf{W}\Sigma\mathbf{P}^T \tag{8}$$

avec

$$\mathbf{W} = \begin{pmatrix} 0 & -1 & 0 \\ 1 & 0 & 0 \\ 0 & 0 & 1 \end{pmatrix}.$$

On notera que, si non seulement le cap de la caméra mais aussi ses angles de tangage et de roulis sont sensiblement constants pendant la durée de la fenêtre d'observation, la matrice de rotation entre les deux images, $\mathbf{R}$, n'est autre que la matrice identité et les composantes du vecteur $\mathbf{U}$ (ou d'un vecteur quelconque colinéaire à $\mathbf{U}$) dans le référentiel de la caméra ($OX_c$, $OY_c$, $OZ_c$), se déduisent alors directement de la matrice essentielle par (2) ou fondamentale par (6), sans qu'il soit besoin de passer par une décomposition en valeurs singulières. On pourra vérifier à l'aide des accéléromètres montés sur la caméra si les angles de tangage et de roulis sont bien invariants entre les deux images et, dans l'affirmative, procéder à une estimation directe, sans calcul de la matrice $\mathbf{R}$.

A l'étape 350, on calcule la projection $\mathbf{U_T}$ du vecteur $\mathbf{U}$ dans le plan horizontal ($OX_{ct}$, $OY_{ct}$), à partir des angles de roulis et de tangage de la caméra, puis l'on détermine, l'angle $\beta$ entre le vecteur $\mathbf{U_T}$ et l'axe $OX_{ct}$. L'angle $\beta$ n'est autre que celui formé, dans le plan horizontal, entre le vecteur de déplacement et l'axe optique de la caméra.

Si l'on note respectivement $U_T^{Xct}$ et $U_T^{Yct}$ les coordonnées du vecteur de déplacement dans le plan horizontal, exprimées dans le repère (OX$_{ct}$, OY$_{ct}$), l'angle $\beta$ pourra être obtenu par :

$$\beta = \text{Arc} \tan\left(-\frac{U_T^{Yct}}{U_T^{Xct}}\right) \qquad\qquad (9)$$

Avantageusement, l'angle $\beta$ est calculé pour une pluralité de couples d'images successives. On peut effectuer une moyenne glissante ou non de ces angles pour améliorer le rapport signal sur bruit de la mesure angulaire. On entend ici par bruit à la fois le bruit de la mesure, notamment celui induit par les accéléromètres, et le bruit de quantification.

En général, le véhicule n'avançant pas « en crabe », l'axe du véhicule est confondu avec l'axe du déplacement et, par conséquent, l'angle $\beta$ donne directement la position angulaire de la caméra par rapport à l'axe du véhicule. Par axe du véhicule, on entend l'axe selon lequel le véhicule est aligné (autrement dit son axe longitudinal). Cependant, dans un grand nombre d'applications, par exemple pour la cartographie mobile, il est utile de connaître directement le cap de la caméra. On effectue alors l'étape suivante :

A l'étape 360, on détermine l'orientation de la caméra par rapport au référentiel terrestre à partir de la somme $\alpha_c = \alpha_V + \beta$ où le cap, $\alpha_V$, du véhicule pourra être obtenu par les coordonnées GPS en une pluralité de positions successives. Alternativement, l'angle $\alpha_V$ pourra être obtenu à l'aide d'un magnétomètre monté sur le véhicule.

L'angle $\alpha_c$ donne le cap de la caméra, c'est-à-dire l'angle entre le Nord et l'axe OX$_{ct}$, projection de l'axe optique de la caméra sur le plan horizontal.

Selon un second mode de réalisation de l'invention, on ne suppose plus que le cap du véhicule est constant pendant la fenêtre d'observation.

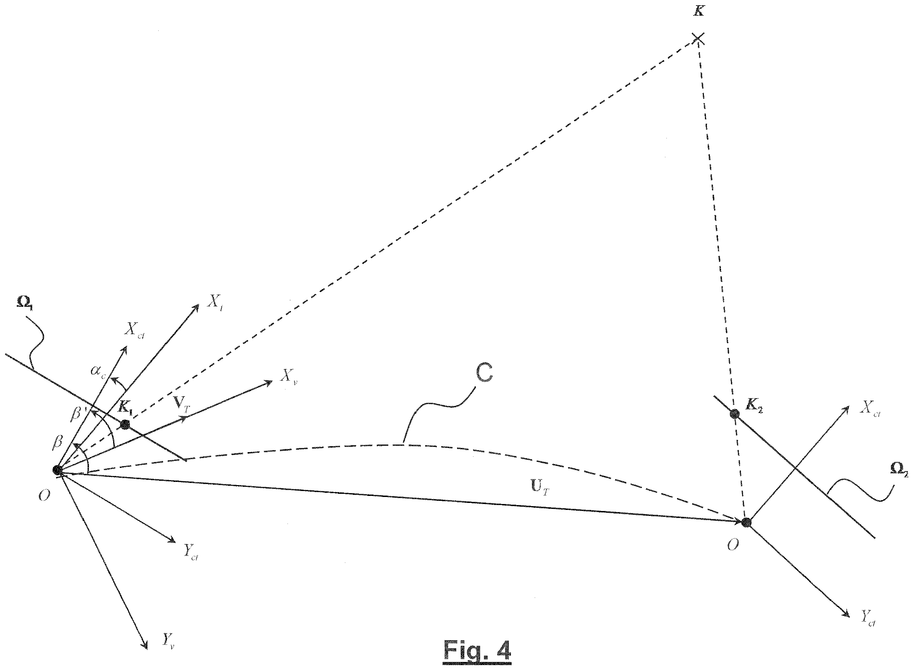

La Fig. 4 décrit schématiquement deux images prises successivement par la caméra embarquée, dans le cas d'une variation de cap du véhicule entre ces deux images. Les conventions de notation sont identiques à celles de la Fig. 2.

La trajectoire du véhicule est désignée par C. On note que le vecteur de déplacement $\mathbf{U_T}$ n'est plus colinéaire au vecteur de vitesse instantanée $\mathbf{V_T}$ mais présente par rapport à lui une composante transversale.

On définit le repère (OX$_v$, OY$_v$) dans le plan horizontal, où OX$_v$ est un axe colinéaire et de même sens que le vecteur $\mathbf{V_T}$ et OY$_v$ est un axe orthogonal à OX$_v$, tel que le repère (OX$_v$, OY$_v$, OZ$_t$) est direct.

On a également représenté sur la figure l'angle $\beta$ entre le vecteur $\mathbf{U_T}$ et l'axe OX$_{ct}$, ainsi que l'angle $\beta'$ entre l'axe du véhicule OX$_v$, défini par le vecteur $\mathbf{V_T}$, et l'axe de visée de la caméra, OX$_{ct}$.

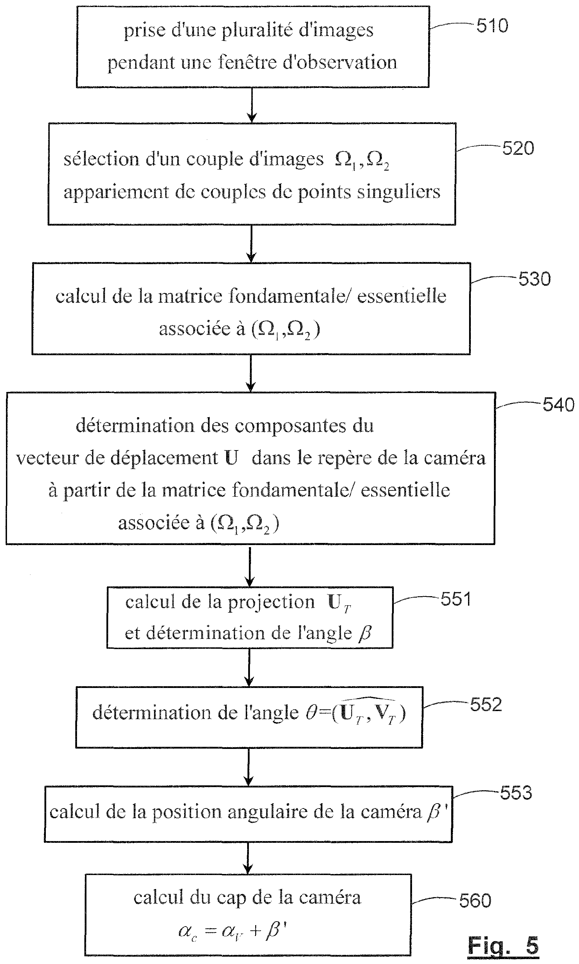

La Fig. 5 représente un ordinogramme de la méthode de calibration de l'orientation de la caméra selon un second mode de réalisation de l'invention.

Comme précédemment, la caméra embarquée prend en 510 une série d'images successives pendant la fenêtre temporelle d'observation. La fréquence de prise de vue doit être choisie suffisamment élevée pour que l'on puisse trouver des points correspondants entre images successives. Cette fréquence dépendra notamment de la vitesse de giration du véhicule et de l'angle de champ de vision de la caméra.

L'étape 520 est identique à l'étape 320, autrement dit on sélectionne au moins deux images successives de la dite série et l'on apparie des couples de points singuliers de deux images successives.

A l'étape 530, on calcule la matrice essentielle (paramètres intrinsèques connus) ou la matrice fondamentale (paramètres intrinsèques inconnus) à partir de la pluralité de couples de points appariés. Avantageusement, une méthode d'estimation itérative à consensus de type RANSAC peut être utilisée pour l'estimation de ces matrices.

A l'étape 540, on calcule la matrice de rotation $\mathbf{R}$ et le vecteur de translation $\mathbf{U}$, exprimé dans le repère de la caméra (OX$_{ct}$, OY$_{ct}$, OZ$_t$) au moyen de (8).

A l'étape 551, on calcule la projection $\mathbf{U_T}$ du vecteur $\mathbf{U}$ dans le plan horizontal (OX$_{ct}$,OY$_{ct}$), à partir des angles de roulis et de tangage de la caméra et l'on détermine comme précédemment, au moyen de l'expression (9), l'angle $\beta$ entre le vecteur de déplacement et l'axe optique.

A l'étape 552, on calcule l'angle, $\theta$, vu dans le plan horizontal, entre le vecteur vitesse instantanée du véhicule, $\mathbf{V}$, à l'instant $t_l$ de la prise de la première image, $\Omega_1$, et le vecteur $\mathbf{U_T}$, autrement dit l'angle entre les vecteurs les vecteurs $\mathbf{V_T}$ et $\mathbf{U_T}$.

On rappelle que les composantes du vecteur vitesse instantanée, $\mathbf{V}$, dans le référentiel terrestre local (OX$_t$, OY$_t$, OZ$_t$) peuvent être obtenues à partir des coordonnées GPS en temps réel du véhicule.

Par ailleurs, on peut déterminer les composantes du vecteur $\mathbf{U_T}$ dans le référentiel terrestre local (OX$_t$, OY$_t$, OZ$_t$) à partir des positions successives du véhicule (données par les coordonnées GPS) aux instants $t_1$ et $t_1+\delta t$, où $t_1+\delta t$ est très rapproché de $t_1$.

On détermine ensuite les composantes de ce même vecteur dans le repère (OX$_v$, OY$_v$, OZ$_t$) défini précédem-

ment. Si l'on note respectivement $U_T^{X_V}$ et $U_T^{Y_V}$ les composantes de $\mathbf{U_T}$ exprimées dans ce repère, l'angle $\theta$ entre les vecteurs $\mathbf{U_T}$ et $\mathbf{V_T}$ peut être obtenu au moyen de :

$$\theta = \arctan\left(-\frac{U_T^{X_V}}{U_T^{Y_V}}\right) \qquad\qquad (10)$$

A l'étape 553, la position angulaire de la caméra par rapport à l'axe du véhicule est alors donnée par :

$$\beta' = \beta + \theta \qquad\qquad (11)$$

Le cas échéant, comme dans le premier mode de réalisation, on peut déterminer, en 560, le cap de la caméra par rapport au référentiel terrestre à partir de $\alpha_c = \alpha_V + \beta$.

Bien que la présente invention ait été décrite en relation avec la détermination de l'angle de cap de la caméra, l'homme du métier comprendra qu'elle peut également s'appliquer à la détermination de son angle de tangage ou de roulis, à condition que les deux autres angles d'orientation puissent être mesurés.

## Revendications

1.   Méthode de calibration de l'orientation d'une caméra vidéo embarquée sur un véhicule en mouvement, ledit véhicule étant aligné selon un axe, dit axe du véhicule, l'orientation de la caméra étant fixe par rapport au véhicule pendant une période d'observation et ledit véhicule gardant un cap constant pendant ladite période par rapport à un référentiel terrestre local $(OX_t, OY_t, OZ_t)$, la caméra prenant (310) au moins deux images de l'environnement du véhicule en deux instants distincts de ladite période, la caméra étant équipée de trois accéléromètres disposés selon trois axes orthogonaux, dont deux situés dans le plan image de la caméra, la méthode comprenant les étapes suivantes :

     - on apparie (320)une pluralité de points appartenant respectivement à ces deux images, un couple de points appariés étant susceptibles de représenter un même point physique du dit environnement;
     - on détermine (330, 340), à partir des coordonnées respectives des points appariés au sein des deux images successives, les composantes d'un vecteur ($\mathbf{U}$) donnant la direction de déplacement de la caméra entre ces deux images, exprimées dans un repère lié à la caméra, ledit vecteur étant déterminé comme le vecteur de translation de la caméra entre ces deux images et les composantes de ce vecteur dans le repère lié à la caméra étant obtenues à partir d'une décomposition de la matrice essentielle ou de la matrice fondamentale associée à ces deux images ;
     - on mesure les angles de roulis et de tangage de la caméra à l'aide desdits accéléromètres et l'on calcule la projection (350) dans le plan horizontal $(OX_t, OY_t)$ du référentiel terrestre local $(OX_t, OY_t, OZ_t)$ dudit vecteur ainsi obtenu au moyen des angles de roulis et de tangage ainsi mesurés et l'on déduit des composantes du vecteur ainsi projeté ($\mathbf{U_T}$), une estimation de l'angle entre l'axe optique de la caméra et l'axe du véhicule, vu dans le plan horizontal $(OX_t, OY_t)$ du référentiel terrestre local $(OX_t, OY_t, OZ_t)$.

2.   Méthode de calibration selon la revendication 1, **caractérisée en ce que** ledit angle est estimé pour une pluralité de couples d'images, que ces estimations sont moyennées et que l'on retient comme estimation dudit angle la moyenne ainsi obtenue.

3.   Méthode de calibration selon l'une des revendications précédentes, **caractérisée en ce que** les couples de points appariés sont obtenus en recherchant des points singuliers dans les deux images, chaque point singulier étant associé à un vecteur de caractéristiques caractérisant son environnement local, et en déterminant pour chaque point singulier de la première image le point singulier de la seconde image ayant les caractéristiques les plus proches.

4.   Méthode de calibration selon l'une des revendications précédentes, **caractérisée en ce que** l'on calcule le cap du véhicule à l'aide des coordonnées d'une pluralité de positions successives du véhicule, dans un référentiel terrestre, et que l'on en calibre (360) le cap de la caméra comme somme du cap du véhicule et de l'angle ainsi estimé.

5. Méthode de calibration selon la revendication 4, **caractérisée en ce que** les coordonnées du véhicule dans le référentiel terrestre sont obtenues à l'aide d'un système de positionnement satellitaire et/ou terrestre.

6. Méthode de calibration de l'orientation d'une caméra vidéo embarquée sur un véhicule en mouvement, ledit véhicule étant aligné selon un axe, dit axe du véhicule, et étant animé d'une vitesse par rapport au référentiel terrestre ($OX_t$, $OY_t$, $OZ_t$), l'orientation de la caméra étant fixe par rapport au véhicule pendant une période d'observation, la caméra prenant (510) au moins deux images de l'environnement du véhicule en deux instants distincts de ladite période, la caméra étant équipée de trois accéléromètres disposés selon trois axes orthogonaux, dont deux situés dans le plan image de la caméra, la méthode comprenant les étapes suivantes :

- on apparie (520) une pluralité de points appartenant respectivement à ces deux images, un couple de points appariés étant susceptibles de représenter un même point physique du dit environnement ;
- on détermine (530, 540), à partir des coordonnées respectives des points appariés au sein des deux images successives, les composantes d'un vecteur (**U**) donnant la direction de déplacement de la caméra entre ces deux images, exprimées dans un repère lié à la caméra, ledit vecteur étant déterminé comme le vecteur de translation de la caméra entre ces deux images et les composantes de ce vecteur dans le repère lié à la caméra étant obtenues à partir d'une décomposition de la matrice essentielle ou de la matrice fondamentale associée à ces deux images ;
- on mesure les angles de roulis et de tangage de la caméra à l'aide desdits accéléromètres et l'on calcule la projection (551) dans le plan horizontal ($OX_t$, $OY_t$) du référentiel terrestre ($OX_t$, $OY_t$, $OZ_t$) dudit vecteur ainsi obtenu au moyen des angles de roulis et de tangage ainsi mesurés, et l'on déduit des composantes du vecteur ainsi projeté ($\mathbf{U_T}$), une estimation d'un premier angle entre l'axe optique de la caméra et le vecteur de déplacement du véhicule, vu dans le plan horizontal ;
- on détermine (552) un second angle ($\theta$) entre le vecteur de déplacement du véhicule et le vecteur de la vitesse (**V**) du véhicule, projeté dans le plan horizontal ($OX_t$, $OY_t$) du référentiel terrestre ($OX_t$, $OY_t$, $OZ_t$) ;
- on estime l'angle entre l'axe optique de la caméra et l'axe du véhicule dans ledit plan à partir desdits premier et second angles.

**Patentansprüche**

1. Verfahren zum Kalibrieren der Ausrichtung einer an Bord eines sich bewegenden Fahrzeugs mitgeführten Videokamera, wobei das Fahrzeug entlang einer Achse ausgerichtet ist, Fahrzeugachse genannt, wobei die Ausrichtung der Kamera relativ zu dem Fahrzeug während eines Beobachtungszeitraums fest ist, und wobei das Fahrzeug einen konstanten Kurs während des genannten Zeitraums relativ zu einem örtlichen, terrestrischen Bezugssystem ($OX_t$, $OY_t$, $OZ_t$) beibehält, wobei die Kamera (310) zumindest zwei Bilder der Fahrzeugumgebung zu zwei verschiedenen Zeitpunkten des genannten Zeitraums aufnimmt, wobei die Kamera mit drei Beschleunigungsmessern ausgestattet ist, die entlang von drei orthogonalen Achsen angeordnet sind, von denen zwei in der Bildebene der Kamera liegen, wobei das Verfahren die folgenden Schritte umfasst:

- paarweises Zuordnen (320) einer Mehrzahl von Punkten, die jeweils zu diesen beiden Bildern gehören, wobei ein Paar von zugeordneten Punkten einen gleichen physischen Punkt der Umgebung darstellen kann;
- Bestimmen (330, 340) der Komponenten eines Vektors (**U**), die die Kamerabewegungsrichtung zwischen diesen beiden Bildern angeben und in einem mit der Kamera verknüpften Koordinatensystem ausgedrückt werden, ausgehend von den jeweiligen Koordinaten der zugeordneten Punkte innerhalb der beiden aufeinanderfolgenden Bilder, wobei der Vektor bestimmt wird als der Translationsvektor der Kamera zwischen diesen beiden Bildern und die Komponenten dieses Vektors in dem mit der Kamera verknüpften Koordinatensystem ausgehend von einer Zerlegung der wesentlichen Matrix bzw. der grundlegenden Matrix, die diesen beiden Bilden zugewiesen ist, erhalten werden;
- Messen des Roll- und des Nickwinkels der Kamera unter Verwendung der Beschleunigungsmesser und Berechnen der Projektion (350) des so mittels des so gemessenen Roll- und Nickwinkels erhaltenen Vektors in der horizontalen Ebene ($OX_t$, $OY_t$) des lokalen terrestrischen Bezugssystems ($OX_t$, $OY_t$, $OZ_t$), und Herleiten einer Schätzung des Winkels zwischen der optischen Achse der Kamera und der Achse des Fahrzeugs, betrachtet in der horizontalen Ebene ($OX_t$, $OY_t$) des lokalen terrestrischen Bezugssystems ($OX_t$, $OY_t$, $OZ_t$), ausgehend von den Komponenten des so projizierten Vektors ($\mathbf{U_T}$).

2. Verfahren zum Kalibrieren nach Anspruch 1, **dadurch gekennzeichnet, dass** der Winkel für eine Mehrzahl von Bildpaaren geschätzt wird, diese Schätzungen gemittelt werden und der so erhaltene Mittelwert als Schätzung des Winkels festgehalten wird.

3. Verfahren zum Kalibrieren nach einem der vorangehenden Ansprüche, **dadurch gekennzeichnet, dass** Paare von zugeordneten Punkten erhalten werden, indem nach Einzelpunkten in den beiden Bildern gesucht wird, wobei jeder Einzelpunkt einem Vektor mit seine lokale Umgebung charakterisieren Merkmalen zugeordnet wird, und indem für jeden Einzelpunkt des ersten Bildes der Einzelpunkt des zweiten Bildes bestimmt wird, der die am nächsten liegenden Merkmale aufweist.

4. Verfahren zum Kalibrieren nach einem der vorangehenden Ansprüche, **dadurch gekennzeichnet, dass** der Kurs des Fahrzeugs unter Verwendung der Koordinaten mehrerer aufeinanderfolgender Positionen des Fahrzeugs in einem terrestrischen Bezugssystem berechnet wird und der Kurs der Kamera als Summe des Kurses des Fahrzeugs und des so geschätzten Winkels kalibriert wird (360).

5. Verfahren zum Kalibrieren nach Anspruch 4, **dadurch gekennzeichnet, dass** die Koordinaten des Fahrzeugs im terrestrischen Bezugssystem unter Verwendung eines Satelliten- und/oder terrestrischen Positionierungssystems erhalten werden.

6. Verfahren zum Kalibrieren der Ausrichtung einer an Bord eines sich bewegenden Fahrzeugs mitgeführten Videokamera, wobei das Fahrzeug entlang einer Achse ausgerichtet ist, Fahrzeugachse genannt, und mit einer Geschwindigkeit bezüglich des terrestrischen Bezugssystems $(OX_t, OY_t, OZ_t)$ bewegt wird, wobei die Ausrichtung der Kamera relativ zu dem Fahrzeug während eines Beobachtungszeitraums fest ist, wobei die Kamera zumindest zwei Bilder der Fahrzeugumgebung zu zwei verschiedenen Zeitpunkten des genannten Zeitraums aufnimmt (510), wobei die Kamera mit drei Beschleunigungsmessern ausgestattet ist, die entlang von drei orthogonalen Achsen angeordnet sind, von denen zwei in der Bildebene der Kamera liegen, wobei das Verfahren die folgenden Schritte umfasst:

    - paarweises Zuordnen (520) einer Mehrzahl von Punkten, die jeweils zu diesen beiden Bildern gehören, wobei ein Paar von zugeordneten Punkten einen gleichen physischen Punkt der Umgebung darstellen kann;
    - Bestimmen (530, 540) der Komponenten eines Vektors (**U**), die die Kamerabewegungsrichtung zwischen diesen beiden Bildern angeben und in einem mit der Kamera verknüpften Koordinatensystem ausgedrückt werden, ausgehend von den jeweiligen Koordinaten der zugeordneten Punkte innerhalb der beiden aufeinanderfolgenden Bilder, wobei der Vektor bestimmt wird als der Translationsvektor der Kamera zwischen diesen beiden Bildern und die Komponenten dieses Vektors in dem mit der Kamera verknüpften Koordinatensystem ausgehend von einer Zerlegung der wesentlichen Matrix bzw. der grundlegenden Matrix, die diesen beiden Bilden zugewiesen ist, erhalten werden;
    - Messen des Roll- und des Nickwinkels der Kamera unter Verwendung der Beschleunigungsmesser und Berechnen der Projektion (551) des so mittels des so gemessenen Roll- und Nickwinkels erhaltenen Vektors in der horizontalen Ebene $(OX_t, OY_t)$ des terrestrischen Bezugssystems $(OX_t, OY_t, OZ_t)$, und Herleiten einer Schätzung eines ersten Winkels zwischen der optischen Achse der Kamera und dem Vektor der Verlagerung des Fahrzeugs, betrachtet in der horizontalen Ebene, ausgehend von den Komponenten des so projizierten Vektors $(U_T)$;
    - Bestimmen (552) eines zweiten Winkels $(\theta)$ zwischen dem Vektor der Verlagerung des Fahrzeugs und dem Vektor der Geschwindigkeit (**V**) des Fahrzeugs, projiziert in die horizontale Ebene $(OX_t, OY_t)$ des terrestrischen Bezugssystems $(OX_t, OY_t, OZ_t)$;
    - Schätzen des Winkels zwischen der optischen Achse der Kamera und der Achse des Fahrzeugs in der Ebene ausgehend von dem ersten und dem zweiten Winkel.

**Claims**

1. A method for calibrating the orientation of a video camera onboard a moving vehicle, said vehicle being aligned along an axis, known as the axis of the vehicle, the orientation of the camera being fixed with respect to the vehicle during an observation period and said vehicle keeping a constant course during said period with reference to a local land reference frame $(OX_t, OY_t, OZ_t)$, the camera taking (310) at least two images of the vehicle environment in two distinct instants of said period, the camera being fitted with three accelerometers disposed along three orthogonal axes, two of which being located in the image plane of the camera, the method comprising the following steps:

    - matching (320) a plurality of points respectively belonging to these two images, a pair of matched points being likely to have a same physical point of said environment;

- determining (330, 340), from the respective coordinates of the matched points within both successive images, the components of a vector (**U**) giving the moving direction of the camera between these two images, expressed in a reference frame related to the camera, said vector being determined as the translation vector of the camera between these two images and the components of this vector in the reference frame related to the camera being obtained from a decomposition of the essential matrix or the fundamental matrix associated with these two images;

- measuring the rolling and pitching angles of the camera using said accelerometers and calculating the projection (350) in the horizontal plane ($OX_t$, $OY_t$) of the local land reference frame ($OX_t$, $OY_t$, $OZ_t$) of said vector thus obtained by means of the rolling and pitching angles thus measured and deducing from the components of the vector thus projected ($\mathbf{U_T}$), an estimation of the angle between the optical axis of the camera and the vehicle axis, as seen in the horizontal plane ($OX_t$, $OY_t$) of the local land reference frame ($OX_t$, $OY_t$, $OZ_t$).

2. The calibrating method according to claim 1, **characterised in that** said angle is estimated for a plurality of pairs of images, that these estimations are averaged and that the average thus obtained is retained as the estimation of said angle.

3. The calibrating method according to one of the preceding claims, **characterised in that** the pairs of matched points are obtained by searching for singular points in both images, each singular point being associated with a characteristic vector characterising its local environment, and by determining for each singular point of the first image the singular point of the second image having the closest characteristics.

4. The calibrating method according to one of the preceding claims, **characterised by** calculating the course of the vehicle using the coordinates of a plurality of successive positions of the vehicle, in a land reference frame, and by calibrating (360) the course of the camera as the sum of the vehicle course and of the angle thus estimated.

5. The calibrating method according to claim 4, **characterised in that** the coordinates of the vehicle in the land reference frame are obtained using a land and/or satellite positioning system.

6. The method for calibrating the orientation of a video camera onboard a moving vehicle, said vehicle being aligned along an axis, known as the axis of the vehicle, and having a speed with respect to the land reference frame ($OX_t$, $OY_t$, $OZ_t$), the orientation of the camera being fixed with respect to the vehicle during an observation period, the camera taking (510) at least two images of the vehicle environment in two distinct instants of said period, the camera being fitted with three accelerometers disposed along three orthogonal axes, two of which being located in the image plane of the camera, the method comprising the following steps:

- matching (520) a plurality of points respectively belonging to these two images, a pair of matched points being likely to have a same physical point of said environment;
- determining (530, 540), from the respective coordinates of the matched points within both successive images, the components of a vector (**U**) giving the moving direction of the camera between these two images, expressed in a reference frame related to the camera, said vector being determined as the translation vector of the camera between these two images and the components of this vector in the reference frame related to the camera being obtained from a decomposition of the essential matrix or the fundamental matrix associated with these two images;
- measuring the rolling and pitching angles of the camera using said accelerometers and calculating the projection (551) in the horizontal plane ($OX_t$, $OY_t$) of the local land reference frame ($OX_t$, $OY_t$, $OZ_t$) of said vector thus obtained by means of the rolling and pitching angles thus measured and deducing from the components of the vector thus projected ($\mathbf{U_T}$), an estimation of the angle between the optical axis of the camera and the motion vector of the vehicle, as seen in the horizontal plane;
- determining (552) a second angle ($\vartheta$) between the motion vector of the vehicle and the vector of the speed (**V**) of the vehicle, projected in the horizontal plane ($OX_t$, $OY_t$) of the land reference frame ($OX_t$, $OY_t$, $OZ_t$);
- estimating the angle between the optical axis of the camera and the vehicle axis in said plane from said first and second angles.

**Fig. 1**

EP 2 405 399 B1

**Fig. 2**

prise d'une pluralité d'images
pendant une fenêtre d'observation — 310

sélection d'un couple d'images $\Omega_1, \Omega_2$
appariement de points singuliers — 320

calcul de la matrice fondamentale/ essentielle
associée à $(\Omega_1, \Omega_2)$ — 330

détermination des composantes du
vecteur de déplacement $\mathbf{U}$ dans le repère de la caméra
à partir de la matrice fondamentale/ essentielle
associée à $(\Omega_1, \Omega_2)$ — 340

calcul de $\mathbf{U_T}$ dans le référentiel $(OX_{ct}, OY_{ct})$
calcul de la position angulaire de la caméra $= \beta$ — 350

calcul du cap de la caméra
$\alpha_c = \alpha_V + \beta$ — 360

**Fig. 3**

Fig. 4

prise d'une pluralité d'images
pendant une fenêtre d'observation — 510

sélection d'un couple d'images $\Omega_1, \Omega_2$
appariement de couples de points singuliers — 520

calcul de la matrice fondamentale/ essentielle
associée à $(\Omega_1, \Omega_2)$ — 530

détermination des composantes du
vecteur de déplacement $\mathbf{U}$ dans le repère de la caméra
à partir de la matrice fondamentale/ essentielle
associée à $(\Omega_1, \Omega_2)$ — 540

calcul de la projection $\mathbf{U}_T$
et détermination de l'angle $\beta$ — 551

détermination de l'angle $\theta = \widehat{(\mathbf{U}_T, \mathbf{V}_T)}$ — 552

calcul de la position angulaire de la caméra $\beta'$ — 553

calcul du cap de la caméra
$$\alpha_c = \alpha_r + \beta'$$ — 560

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2770317 A
- US 20090290032 A1

**Littérature non-brevet citée dans la description**

- Amobile System Combining Laser Scanners and Cameras for Urban Spatial Objects Extraction. **YU-ZHONG CHEN et al.** 2007 International Conférence on Machine Learning and Cybernetics. IEEE, 01 Août 2007, 1729-1733
- On-Board Monocular Vision System Pose Estimation through a Dense Optical Flow. **NAVEEN ONKORAPPA et al.** Image Analysis and Récognition. Springer, 21 Juin 2010, 230-239
- **C. HARRIS et al.** A combined corner and edge detector. *Proc. Alvey Vision Conférence,* 1988, 147-152
- **D.G. LOWE.** Distinctive image features from scale-invariant keypoints. *International Journal of Computer Vision,* 2004, vol. 60 (2), 91-110
- **H. BAY et al.** Speeded-Up Robust Features. *Computer Vision and Image Understanding,* Juin 2008, vol. 110 (3), 346-359
- **R. HARLEY et al.** Multiple view geometry in computer vision. Cambridge University Press, 2003
- **M.A. FISCHLER.** Random Sample Consensus : a paradigm for model fitting with applications to image analysis and automated cartography. *Communications of the ACM,* vol. 24 (6), 381-395